# EUROPEAN PATENT APPLICATION

(11) **EP 4 730 418 A1**
(43) Date of publication of application: **22.04.2026**
(21) Application number: 25196300.5
(22) Date of filing: 15.08.2025
(51) Int. Cl.: H01M 4/131, H01M 4/136, H01M 4/36, H01M 4/525, H01M 4/58, H01M 4/02

(54) **CATHODE FOR LITHIUM SECONDARY BATTERY AND LITHIUM SECONDARY BATTERY INCLUDING THE SAME**

(30) Priority: 17.10.2024 KR 20240142044
(71) Applicant: SK On Co., Ltd., Seoul 03161 (KR)
(72) Inventor: YOOK, Seung Hyun, 34124 Daejeon (KR); KIM, Moon Sung, 34124 Daejeon (KR); CHUNG, Da Bin, 34124 Daejeon (KR); CHOI, Seung Ryul, 34124 Daejeon (KR)
(74) Representative: Stolmár & Partner Patentanwälte PartG mbB

(57) **Abstract**

A cathode for a lithium secondary battery includes a cathode current collector, and a cathode mixture layer on at least one surface of the cathode current collector. The cathode mixture layer includes a first cathode mixture layer on the cathode current collector, and a second cathode mixture layer on the first cathode mixture layer, the first cathode mixture layer includes a lithium transition metal oxide particle in a form of a single particle containing nickel (Ni), and the second cathode mixture layer includes lithium metal phosphate particles.

## Description

### TECHNICAL FIELD

The disclosure and implementations disclosed in this patent document generally relate to a cathode for a lithium secondary battery and a lithium secondary battery including the same.

### BACKGROUND

Recently, a significant amount of research has been conducted into electric vehicles (EVs) that may replace fossil fuel vehicles such as gasoline and diesel vehicles, which are one of the main causes of air pollution. Lithium secondary batteries with high discharge voltage and output stability are mainly used as the power source for these electric vehicles (EVs). Accordingly, there is demand for the development of technologies that may improve the performance of lithium secondary batteries.

### SUMMARY

The present disclosure can be implemented in some embodiments to provide a lithium secondary battery with improved safety.

According to an aspect of the present disclosure, the energy density of a lithium secondary battery may be improved.

According to an aspect of the present disclosure, the lifespan of a lithium secondary battery may be improved.

According to an aspect of the present disclosure, the resistance characteristics of a cathode for a lithium secondary battery may be improved.

In some embodiments of the present disclosure, a cathode for a lithium secondary battery includes a cathode current collector; and a cathode mixture layer on at least one surface of the cathode current collector. The cathode mixture layer includes a first cathode mixture layer on the cathode current collector, and a second cathode mixture layer on the first cathode mixture layer, the first cathode mixture layer includes a lithium transition metal oxide particle in a form of a single particle containing nickel (Ni), and the second cathode mixture layer includes lithium metal phosphate particles.

In some embodiments, the lithium transition metal oxide particle may be represented by Chemical Formula 1, LiₓNiₐCo_{b}Mn_{c}M_{d}O_{2+y}, where M is at least one element selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, and Zr, and 0.8≤x≤1.5, -0.1≤y≤0.1, 0.33≤a≤1, 0≤b≤0.33, 0≤c≤0.33, 0≤d≤0.33, and a+b+c+d=1.

In some embodiments, in the lithium transition metal oxide particle, a content of nickel (Ni) may be 50 mol% to 75 mol% based on an entire transition metal oxide excluding lithium (Li).

In some embodiments, the lithium transition metal oxide particle may be coated or doped with at least one selected from the group consisting of Al, Ti, Ba, Zr, Si, B, Mg, P, V, W, alloys thereof, and oxides thereof.

In some embodiments, the lithium metal phosphate particles may be represented by Chemical Formula 2, LiMePO₄, where Me is at least one element selected from Co, Ni, Fe, and Mn.

In some embodiments, an average particle diameter (D50) of the lithium metal phosphate particles may be equal to or less than an average particle diameter (D50) of the lithium transition metal oxide particle.

In some embodiments, an average particle diameter (D50) of the lithium metal phosphate particle may be 0.5 µm to 3 µm.

In some embodiments, an average particle diameter (D50) of the lithium transition metal oxide particle may be 3 µm to 7 µm.

In some embodiments, a loading weight ratio of the first cathode mixture layer and the second cathode mixture layer may be 70:30 to 85:15.

In some embodiments, a loading weight of the first cathode mixture layer may be 11.2 mg/cm² to 27 mg/cm².

In some embodiments, a loading weight of the second cathode mixture layer may be 1.6 mg/cm² to 9 mg/cm².

In some implementations, the first cathode mixture layer and the second cathode mixture layer may each further include a binder, and a content of the binder included in the first cathode mixture layer may be different from a content of the binder included in the second cathode mixture layer.

In some implementations, a weight % of the binder included in the second cathode mixture layer may be greater than or equal to a weight % of the binder included in the first cathode mixture layer.

In some embodiments of the present disclosure, a lithium secondary battery includes the cathode for a lithium secondary battery according to any one of the above-described embodiments.

### BRIEF DESCRIPTION OF DRAWING

Certain aspects, features, and advantages of the present disclosure are illustrated by the following detailed description with reference to the accompanying drawings.

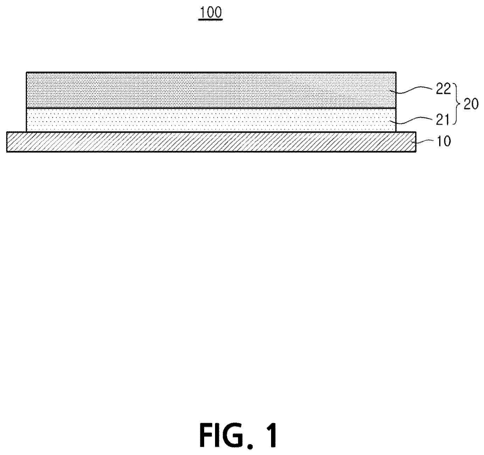

FIG. 1 is a cross-sectional diagram conceptually illustrating a cathode for a lithium secondary battery according to an embodiment.

### DETAILED DESCRIPTION

Features of the present disclosure disclosed in this patent document are described by example embodiments with reference to the accompanying drawings.

Hereinafter, the technology disclosed in this specification and implementation examples thereof will be described in detail with reference to the attached drawings. However, the embodiment of the technology may be modified in various other forms, and the scope thereof is not limited to the implementation examples described below. In addition, the technology disclosed in this specification may be applied not only by being limited to the configurations of the implementation examples described below, but also may be configured by selectively combining all or part of respective implementation examples so that various modifications may be made.

As described above, as the demand for lithium secondary batteries increases, development of a technology capable of improving the performance of lithium secondary batteries is required. In detail, a technology capable of manufacturing a high-energy density lithium secondary battery cell is required to improve the driving range of electric vehicles (EVs).

In this regard, a cathode for a lithium secondary battery according to an implementation example may include lithium transition metal oxide particles such as a lithium nickel-cobalt-manganese oxide (NCM)-based active material. The NCM-based active material has a high capacity but relatively poor structural stability, so the safety of the cathode and lithium secondary battery including the same may be an issue.

To resolve this safety problem, the cathode for a lithium secondary battery according to another embodiment may include lithium metal phosphate particles such as a lithium iron phosphate (LFP)-based active material. The LFP-based active material has excellent structural stability but low capacity, so there may be limitations in improving the energy density of the cathode and lithium secondary battery including the same.

Meanwhile, the cathode for a lithium secondary battery according to another embodiment may include an active material obtained by blending the above-described NCM-based active material and the LFP-based active material. However, when the NCM-based active material and the LFP-based active material are adjacent to each other, the NCM-based active material, which has relatively poor safety, may affect the safety of the LFP-based active material, so the safety improvement effect through the addition of the LFP-based active material may be insufficient.

According to an embodiment of the present disclosure, the above-described problems may be alleviated to provide a cathode for a lithium secondary battery having excellent energy density, safety, and the like. Hereinafter, embodiments of the present disclosure will be described in detail with reference to FIG. 1.

FIG. 1 is a cross-sectional view conceptually illustrating a cathode for a lithium secondary battery according to an embodiment.

### Cathode for Lithium Secondary Battery

A cathode 100 for a lithium secondary battery according to an embodiment includes a cathode current collector 10, and a cathode mixture layer 20 on at least one surface of the cathode current collector, and the cathode mixture layer includes a first cathode mixture layer 21 on the cathode current collector 10, and a second cathode mixture layer 22 on the first cathode mixture layer. The first cathode mixture layer 21 includes lithium transition metal oxide particles in the form of a single particle containing nickel (Ni), and the second cathode mixture layer 22 includes lithium metal phosphate particles.

The cathode 100 for a lithium secondary battery includes a first cathode mixture layer 21, which is a lower layer adjacent to the cathode current collector 10, containing high-capacity lithium transition metal oxide particles, and a second cathode mixture layer 22, which is an upper layer spaced from the cathode current collector 10, containing lithium metal phosphate particles having excellent structural stability (see FIG. 1). Accordingly, the energy density, safety, and the like of a lithium secondary battery including the same may be excellent.

The components of the cathode current collector 10 are not particularly limited. For example, the cathode current collector may be a plate or foil formed of at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and alloys thereof. In some implementations, the cathode current collector may be aluminum foil (Al-foil).

The thickness of the cathode current collector 10 is not particularly limited. For example, the thickness of the cathode current collector may be 0.1 µm to 50 µm.

The first cathode mixture layer 21, which is a lower layer adjacent to the cathode current collector 10, includes lithium transition metal oxide particles. The lithium transition metal oxide particles are cathode active materials with high capacity, and when the first cathode mixture layer 21, which is a lower layer in the cathode 100 for a lithium secondary battery, includes the lithium transition metal oxide particles, the energy density and safety of the lithium secondary battery may be improved.

The lithium transition metal oxide particles included in the first cathode mixture layer 21 may have a single particle form. In detail, the lithium transition metal oxide particles may be single particles composed of a single crystal.

The term "single particle form" used in this specification is used to exclude, for example, secondary particles formed by agglomeration of multiple primary particles. For example, in the lithium transition metal oxide, a secondary particle structure in which primary particles (for example, more than 10, 20 or more, 30 or more, 40 or more, 50 or more, or the like) are assembled or agglomerated may be excluded.

In addition, the term "single particle form" used in this specification does not exclude, for example, single particles in the range of 2 to 10 that are not agglomerated but simply attached or contacted to form a single body.

In the case where the first cathode mixture layer 21, which is the lower layer in the cathode 100 for a lithium secondary battery, includes lithium transition metal oxide particles having a single particle form, the safety of the lithium secondary battery may be further improved.

Whether the lithium transition metal oxide particle has a single particle form or not may be distinguished based on an ion image obtained by analyzing a cross-section of the particle using a focused ion beam (FIB). For example, if the particle has a secondary particle structure, even if it is observed as a single particle in a cross-section image of a Scanning Electron Microscope (SEM), two or more single crystals may be observed as the particles composed of two or more crystals depending on the difference in crystal orientation, in a FIB analysis image. Accordingly, if two or more single crystals depending on the difference in crystal orientation are not observed in the FIB analysis image, it may be determined that the active material particle has a single particle form.

In some embodiments, the lithium transition metal oxide particle may be an NCM-based active material containing nickel (Ni), cobalt (Co), and manganese (Mn). In detail, the lithium transition metal oxide particle may be represented by the following Chemical Formula 1.

[Chemical Formula 1] LiₓNiₐCo_{b}Mn_{c}M_{d}O_{2+y}

In the Chemical Formula 1 above, M is at least one element selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, and Zr, and 0.8≤x≤1.5, - 0. 1≤y≤0. 1, 0.33≤a≤1, 0≤b≤0.33, 0≤c≤0.33, 0≤d≤0.33, and a+b+c+d=1.

The chemical structure represented by the Chemical Formula 1 above represents a bonding relationship included in the layered structure or crystal structure of the active material, and the Ni, Co, and Mn may be provided as the main active element of the active material. For example, the chemical structure indicated by the Chemical Formula 1 is provided to express the bonding relationship of the main active element, and does not exclude other additional elements. Therefore, the Chemical Formula 1 should be understood as a formula that encompasses the introduction and substitution of additional elements.

The particle composition of the lithium nickel-cobalt-manganese oxide-based active material may be confirmed by inductively coupled plasma (ICP) analysis. For example, the particles of the cathode active material may be analyzed by ICP, and the number of oxygen atoms is normalized to 1.8 to 2.2 (for example, 2), thereby obtaining the chemical formula of the cathode active material.

In some embodiments, the lithium transition metal oxide particles may be a mid-nickel (Mid-Ni) active material. According to an embodiment, the content of Ni (for example, the mole fraction of nickel among the total moles of nickel, cobalt, and manganese) in the lithium nickel-cobalt-manganese oxide active material may be 0.5 to 0.75. According to another embodiment, the content of nickel (Ni) based on the entire metal oxide particles excluding lithium (Li) in the lithium transition metal oxide particles may be 50 mol% to 75 mol%. In detail, the content of nickel (Ni) based on the entire metal oxide particles excluding lithium (Li) in the lithium transition metal oxide particles may be 55 mol% or more, or 60 mol% or more, or 70 mol% or less.

When the lithium transition metal oxide particles are a mid-nickel (Mid-Ni) active material, the energy density, safety, price competitiveness, and the like of the cathode and the lithium secondary battery including the same may be excellent.

In some embodiments, the lithium transition metal oxide particles may be coated or doped with at least one selected from the group consisting of Al, Ti, Ba, Zr, Si, B, Mg, P, V, W, alloys thereof, and oxides thereof. The above-described materials are for enhancing the chemical/structural stability of the active material, and may be incorporated together into the layered structure/crystal structure of the active material to form a bond. In this case, the upper operating voltage limit of the lithium secondary battery may be controlled, thereby suppressing the voltage decay of the lithium secondary battery.

The coating or doping material may be present on the surface of the lithium transition metal oxide particle, or may penetrate through the particle surface and be included in the bonding structure represented by the Chemical Formula 1.

In some embodiments, the coating material may form a coating layer having a sea-type shape or an island-type shape on the surface of the lithium transition metal oxide particle.

In some embodiments, the content of the coating or doping material in the lithium transition metal oxide particles may be 500 to 8,000 ppm, 1,000 to 8,000 ppm, or 1,500 to 8,000 ppm of the total weight of all elements excluding lithium and oxygen. When the content of the above material is as described above, the initial capacity decrease and resistance increase of the lithium secondary battery may be prevented, and the voltage decay of the lithium secondary battery may be further suppressed.

In some embodiments, the coating material may be formed by a dry coating method or a wet coating method. For example, the lithium transition metal oxide particles and the coating source may be dry mixed or wet mixed and heat treated (for example, sintered or dried) to coat the surface of the lithium transition metal oxide particles.

In some implementations, the content of the lithium transition metal oxide particles included in the first cathode mixture layer 21 may be 50 wt% to 100 wt%. In detail, the content of the lithium transition metal oxide particles included in the first cathode mixture layer 21 may be 70 wt% or more, or 100 wt% or less.

The second cathode mixture layer 22, which is an upper layer separated from the cathode current collector 10, includes lithium metal phosphate particles. In this case, when a short occurs inside a lithium secondary battery, lithium metal phosphate particles with high structural stability react first, thereby reducing the instantaneous explosive power.

The lithium metal phosphate particles may be particles with an olivine structure with excellent structural stability. In detail, the lithium metal phosphate particles may be represented by the following Chemical Formula 2.

[Chemical Formula 2] LiMePO₄

In the Chemical Formula 2, Me is at least one element selected from Co, Ni, Fe, and Mn.

For example, the lithium metal phosphate particles represented by the Chemical Formula 2 may include a lithium-iron phosphate (LFP)-based active material containing iron (Fe).

In some embodiments, the lithium metal phosphate particles may be lithium manganese-iron phosphate (LMFP)-based active materials represented by a chemical formula of LiMnxFe1-xPO4 (0<x<1). In detail, 0.5≤x≤0.7 may be satisfied in the chemical formula. The LMFP-based active material is an active material in which some of the iron (Fe) in the LFP-based active material is replaced with manganese (Mn), and may have relatively superior energy density and low-temperature performance compared to the LFP-based active material. Therefore, when the cathode 100 for a lithium secondary battery includes the LMFP-based active material, a high-energy density lithium secondary battery may be provided.

The composition of the lithium metal phosphate particles may be confirmed by inductively coupled plasma (ICP) analysis. For example, the lithium metal phosphate particles may be analyzed by ICP, and the number of phosphorus atoms may be normalized to 1 to obtain a chemical formula.

In some embodiments, the content of the lithium metal phosphate particles included in the second cathode mixture layer 22 may be 50 wt% to 100 wt%. In detail, the content of the lithium metal phosphate particles included in the second cathode mixture layer 22 may be 70 wt% or more, or 100 wt% or less.

In some embodiments, the average particle diameter (D50) of the lithium metal phosphate particles may be less than or equal to the average particle diameter (D50) of the lithium transition metal oxide particles. When the size of the lithium metal phosphate particles is adjusted to be relatively small, the energy density of the cathode and the lithium secondary battery including the lithium metal phosphate particles having a relatively small capacity may be improved.

In some embodiments, the average particle diameter (D50) of the lithium metal phosphate particles may be 0.5 µm to 3 µm. In detail, the average particle diameter (D50) of the lithium metal phosphate particles may be 1 µm or more or 1.5 µm or more, 2.5 µm or less or 2 µm or less.

In some implementations, the average particle diameter (D50) of the lithium transition metal oxide particles may be 3 µm to 7 µm. In detail, the average particle diameter (D50) of the lithium transition metal oxide particles may be 3.3 µm or more or 3.6 µm or more, 5.5 µm or less or 4.5 µm or less.

The average particle diameter (D50) is the average particle diameter of the volume of the particles, and the measurement method thereof is not particularly limited. For example, the average particle diameter (D50) may be a particle diameter value at a volume fraction of 50% when being accumulated from the smallest particles in the particle size distribution of the particles measured using a particle size analysis device by laser diffraction.

In some implementations, the loading weight ratio of the first cathode mixture layer 21 and the second cathode mixture layer 22 may be 70:30 to 85:15. In detail, the loading weight ratio of the first cathode mixture layer 21 and the second cathode mixture layer 22 may be 77.5:22.5 to 82.5:17.5. The loading weight (LW) may mean a weight per unit area (mg/cm²) of the cathode mixture layer formed on the surface of the cathode current collector. If the loading weight ratio of the first cathode mixture layer 21 to the total loading weight of the first cathode mixture layer 21 and the second cathode mixture layer 22 is less than 70%, the cell capacity may be reduced, and if the loading weight ratio of the second cathode mixture layer 22 is less than 15%, the electrode processability may be reduced.

In this regard, lithium transition metal oxide particles having a single particle form may be difficult to roll because the particle size thereof is smaller than that of lithium transition metal oxide particles having a secondary particle structure. Accordingly, it may be difficult to improve the capacity of a cathode including lithium transition metal oxide particles having a single particle form, and it may be even more difficult to improve the capacity of a cathode including lithium metal phosphate particles such as LFP-based active materials having relatively low capacity.

Therefore, when the loading weight (LW) ratio of the first cathode mixture layer 21 and the second cathode mixture layer 22 is adjusted within the above-described range, a cathode for a lithium secondary battery having high capacity and improved safety may be provided even if lithium transition metal oxide particles having a single particle form are included.

In some implementation examples, the loading weight of the first cathode mixture layer 21 may be 11.2 mg/cm² to 27 mg/cm². In detail, the loading weight of the first cathode mixture layer 21 may be 15 mg/cm² or more or 19 mg/cm² or more, 23 mg/cm² or less or 20 mg/cm² or less.

In some implementations, the loading weight of the second cathode mixture layer 22 may be 1.6 mg/cm² to 9 mg/cm². In detail, the loading weight of the second cathode mixture layer 22 may be 2 mg/cm² or more or 4 mg/cm² or more, 7 mg/cm² or less or 5 mg/cm² or less.

In some implementations, the weight % of the lithium transition metal oxide particles may be greater than or equal to the weight % of the lithium metal phosphate particles based on the total weight of the cathode active material included in the cathode 100 for a lithium secondary battery. In detail, based on the total weight of the cathode active material included in the cathode 100 for a lithium secondary battery, the content of the lithium transition metal oxide particles may be 50 wt% to 99 wt%, and the content of the lithium metal phosphate particles may be 1 wt% to 50 wt%. In more detail, based on the total weight of the cathode active material included in the cathode 100 for a lithium secondary battery, the content of the lithium transition metal oxide particles may be 70 wt% to 90 wt%, and the content of the lithium metal phosphate particles may be 10 wt% to 30 wt%. In this case, the safety and energy density of the cathode 100 for a lithium secondary battery may be secured at the same time.

In some implementations, the first cathode mixture layer 21 and the second cathode mixture layer 22 may each further include a binder, and the content of the binder included in the first cathode mixture layer 21 may be different from the content of the binder included in the second cathode mixture layer 22.

The binder is not particularly limited. For example, the binder may include one type or two or more types of styrene butadiene rubber (SBR), polytetrafluoroethylene, polyvinylidene fluoride (PVDF), vinylidene fluoride/hexafluoropropylene copolymer, polyacrylonitrile, polymethyl methacrylate, and the like.

In some implementations, the weight % of the binder included in the second cathode mixture layer 22 may be greater than or equal to the weight % of the binder included in the first cathode mixture layer 21. When the content of the binder included in the upper layer is relatively higher than that of the lower layer in the cathode 100 for a lithium secondary battery, the electrode resistance may be improved while also ensuring excellent electrode adhesion. In detail, when the second cathode mixture layer 22, which is the upper layer, includes lithium metal phosphate particles having a relatively small particle size and a large surface area, the content of the binder included therein may be adjusted relatively higher to improve the electrode adhesion.

In some implementations, the content of the binder included in the first cathode mixture layer 21 may be 0.1 wt% to 5.0 wt%. In detail, the content of the binder included in the first cathode mixture layer 21 may be 0.5 wt% or more, or 1.5 wt% or less.

In some implementations, the content of the binder included in the second cathode mixture layer 22 may be 0.5 wt% to 7.0 wt%. In detail, the content of the binder included in the second cathode mixture layer 22 may be 1.0 wt% or more, or 2.0 wt% or less.

The cathode mixture layer 20 may further include a conductive material. In detail, the first cathode mixture layer 21 and the second cathode mixture layer 22 may each further include a conductive material. The conductive material is not particularly limited. For example, the conductive material may be at least one selected from a particle-type carbon material and a carbon fiber material. The particle-type carbon material may be carbon black such as Super-P or Super-C, acetylene black, Ketjen black, or the like, and the carbon fiber material may be carbon fiber, carbon nanotube (CNT), vapor-grown carbon fiber (VGCF), or the like.

The content of the conductive material included in the cathode mixture layer 20 is not particularly limited. For example, the content of the conductive material included in the cathode mixture layer 20 may be 0.1 wt% to 10 wt%. In addition, the content of the conductive material included in the first cathode mixture layer 21 and the second cathode mixture layer 22 may be 0.1 wt% or more or 0.5 wt% or more, and 10 wt% or less or 1.0 wt% or less, respectively.

The cathode 100 for a lithium secondary battery according to the above-described embodiments may be manufactured by the following method.

### Method of Manufacturing Cathode for Lithium Secondary Battery

A manufacturing method of cathode 100 for a lithium secondary battery according to an embodiment includes the steps of manufacturing a first cathode slurry containing a first cathode active material and a second cathode slurry containing a second cathode active material, respectively; and the step of forming a cathode mixture layer 20 on at least one surface of the cathode current collector 10, and the cathode mixture layer 20 includes a first cathode mixture layer 21 on the cathode current collector 10; and a second cathode mixture layer 22 on the first cathode mixture layer 21.

Detailed descriptions of the cathode current collector 10, the cathode mixture layer 20, the first cathode mixture layer 21, the second cathode mixture layer 22, and the like overlap with the above-described contents, and thus descriptions thereof are omitted.

In some implementation examples, the first cathode slurry may be prepared by mixing lithium transition metal oxide particles with a solvent, and the second cathode slurry may be prepared by mixing lithium metal phosphate particles with a solvent. The solvent is not particularly limited. For example, the solvent may be N-methyl-2-pyrrolidone (NMP).

In some implementation examples, the first cathode slurry and the second cathode slurry may each further include a component such as a binder, a conductive agent, and the like. Detailed descriptions of the binder and the conductive agent overlap with the above-described content, and thus descriptions thereof are omitted.

In some implementations, the first cathode mixture layer 21 may be formed by applying the first cathode slurry to at least one surface of the cathode current collector 10 and then drying the same. The second cathode mixture layer 22 may be formed by applying the second cathode slurry on the first cathode slurry or the first cathode mixture layer 21 and then drying the same.

According to an implementation, the second cathode mixture layer 22 may be manufactured by applying the second cathode slurry on the first cathode mixture layer 21 that has been formed previously and then drying the same. According to another implementation, the first cathode slurry and the second cathode slurry may be applied simultaneously to the surface of the cathode current collector 10 and then dried simultaneously to form the first cathode mixture layer 21 and the second cathode mixture layer 22 simultaneously.

The method of applying the first cathode slurry and the second cathode slurry is not particularly limited. For example, the first cathode slurry and the second cathode slurry may be applied using a method such as bar coating, casting, or spraying.

In some embodiments, the drying of the first cathode slurry and the second cathode slurry may be performed at 100 to 200°C. For example, the drying of the first cathode slurry and the second cathode slurry may be performed at 130 to 170°C.

### Lithium Secondary Battery

A lithium secondary battery according to an embodiment includes a cathode 100 for a lithium secondary battery according to any one of the above-described embodiments. For example, the lithium secondary battery may include a unit cell including the cathode for a lithium secondary battery, an anode, and a separator. The separator may be disposed between the cathode and the anode described above in the unit cell.

The anode is not particularly limited. For example, the anode may include an anode current collector; and an anode mixture layer on at least one surface of the anode current collector.

The components of the anode current collector are not particularly limited. For example, the anode current collector may be a plate or foil formed of one or more of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), and alloys thereof. In some implementations, the anode current collector may be copper foil (Cu-foil).

The thickness of the anode current collector is not particularly limited. For example, the thickness of the anode current collector may be 0.1 µm to 50 µm.

The anode mixture layer may include an anode active material. The anode active material is not particularly limited. For example, the anode active material may be at least one selected from the group consisting of carbon-based materials such as crystalline carbon, amorphous carbon, carbon composites, and carbon fibers; lithium metal; lithium alloys; silicon-containing materials, and tin-containing materials.

The crystalline carbon may be, for example, graphite-based carbon such as natural graphite, artificial graphite, graphitized coke, graphitized mesocarbon microbeads (MCMB), graphitized mesophase pitch-based carbon fibers (MPCF), or the like.

The amorphous carbon may be, for example, hard carbon, soft carbon, coke, mesocarbon microbeads (MCMB), or mesophase pitch-based carbon fibers (MPCF).

The elements included in the lithium alloy may be, for example, aluminum, zinc, bismuth, cadmium, antimony, silicon, lead, tin, gallium, or indium.

The silicon-containing material is not particularly limited as long as it contains silicon, and may be an active material capable of alloying with lithium (Li). For example, the silicon-containing material may be at least one selected from the group consisting of silicon (Si), silicon oxide (SiOx; 0<x<2), metal-doped silicon oxide (SiOx; 0<x<2), carbon-coated silicon oxide (SiOx; 0<x<2), silicon-carbon composite (Si-C), and silicon alloy.

The content of the anode active material included in the anode mixture layer is not particularly limited. For example, the content of the anode active material included in the anode mixture layer may be from 50 wt% to 99 wt%.

The anode mixture layer may further include a binder. The binder is not particularly limited. For example, the binder may be any one of a rubber-based binder such as styrene-butadiene rubber (SBR), fluorine-based rubber, ethylene propylene rubber, butadiene rubber, isoprene rubber, or silane-based rubber; a cellulose-based binder such as carboxymethyl cellulose (CMC), hydroxypropyl methyl cellulose, methyl cellulose, or alkali metal salts thereof; and combinations thereof.

The content of the binder included in the anode mixture layer is not particularly limited. For example, the content of the binder included in the anode mixture layer may be 0.1 wt% to 10 wt%.

The anode mixture layer may further include a conductive material. The conductive material is not particularly limited. For example, the conductive material may be at least one selected from a particulate carbon material and a carbon fiber material. The particulate carbon material may be carbon black such as Super-P or Super-C, acetylene black, Ketjen black, or the like, and the carbon fiber material may be carbon fiber, carbon nanotube (CNT), vapor-grown carbon fiber (VGCF), or the like.

The content of the conductive material included in the anode mixture layer is not particularly limited. For example, the content of the conductive material included in the anode mixture layer may be 0.1 wt% to 10 wt%.

The separator is not particularly limited. For example, the separator may include a porous polymer film manufactured from a polyolefin polymer such as an ethylene homopolymer, a propylene homopolymer, an ethylene/butene copolymer, an ethylene/hexene copolymer, an ethylene/methacrylate copolymer, or the like. In addition, the separator may include a nonwoven fabric formed from high-melting-point glass fibers, polyethylene terephthalate fibers, or the like.

In some embodiments, the lithium secondary battery may be manufactured by housing the above-described unit cell in a pouch, which is a battery case, and then injecting an electrolyte.

The electrolyte may include an organic solvent and a lithium salt. The organic solvent acts as a medium through which ions involved in the electrochemical reaction of the battery may move, and for example, carbonate-based, ester-based, ether-based, ketone-based, alcohol-based, or aprotic solvents may be used alone or in combination of two or more, and the mixing ratio in the case of using two or more types in combination may be appropriately adjusted according to the required battery performance.

The lithium salt is a substance that is dissolved in an organic solvent and acts as a source of lithium ions in the battery, enables the basic operation of a lithium secondary battery, and promotes the movement of lithium ions between the cathode and the anode. A known substance may be used as the lithium salt at a concentration appropriate for the purpose. The electrolyte may further include a known solvent to improve charge/discharge characteristics, flame retardancy characteristics, and the like, as needed, and may include a known additive.

In some embodiments, the unit cell may include a solid electrolyte instead of a separator between the cathode and the anode. The solid electrolyte is not particularly limited, and may be, for example, an oxide-based solid electrolyte, a sulfide-based solid electrolyte, or a polymer-based solid electrolyte.

### Examples

Hereinafter, embodiments will be additionally described with reference to specific experimental examples. The examples and comparative examples included in the experimental examples are merely illustrative of the present disclosure and do not limit the scope of the appended claims. It will be apparent to those skilled in the art that various changes and modifications to the examples are possible within the scope and technical idea of the present disclosure, and it is natural that such changes and modifications fall within the scope of the appended claims.

### 1. Manufacturing of Cathode and Secondary Battery

### 1) Manufacturing of Cathode for Lithium Secondary Battery

### (1) Example 1

A single particle-shaped NCM-based active material particle represented by the chemical formula of LiNi_{0.6}Co_{0.1}Mn_{0.3}O₂ with an average particle diameter (D50) of 3.9 µm was prepared as lithium transition metal oxide particles, and an LFP-based active material particle represented by the chemical formula of LiFePO₄ with an average particle diameter (D50) of 1.6 µm was prepared as lithium metal phosphate particles. In addition, polyvinylidene fluoride (PVDF) was prepared as a binder, multi-walled carbon nanotubes (MWCNT) were prepared as a conductive material, and Polyvinylpyrrolidone (PVP) was prepared as a dispersant.

Based on the solid content, 98.15 wt% of NCM-based active material particles, 1.0 wt% of binder, 0.7 wt% of conductive agent, and 0.15 wt% of dispersant were mixed with a solvent (NMP) to prepare a first cathode slurry.

In addition, based on the solid content, 97.65 wt% of LFP-based active material particles, 1.5 wt% of binder, 0.7 wt% of conductive agent, and 0.15 wt% of dispersant were mixed with a solvent (NMP) to prepare a second cathode slurry.

The first cathode slurry and the second cathode slurry were applied so that the loading weight (LW) ratio of the finally prepared first cathode mixture layer (lower layer) and the second cathode mixture layer (upper layer) was 8:2. In detail, the first cathode slurry was applied on one surface of a cathode current collector (Al-foil) having a thickness of 12 µm with a loading weight of 19.2 mg/cm², and at the same time, the second cathode slurry was applied on the surface of the first cathode slurry with a loading weight of 4.8 mg/cm².

Thereafter, the cathode slurries applied on one surface of the cathode current collector were dried at 140°C for 12 hours to form a first cathode mixture layer and a second cathode mixture layer on one surface of the cathode current collector, and rolled to have a thickness of 151 µm and a density of 3.529 g/cc, thereby manufacturing the cathode of Example 1. Based on the entire cathode manufactured, the weight ratio of the NCM-based active material and the LFP-based active material was 80:20.

### (2) Example 2

A cathode for a lithium secondary battery of Example 2 was manufactured in the same manner as Example 1, except that a single particle-shaped NCM active material particle having an average particle diameter (D50) of 3.9 µm and represented by a chemical formula of LiNi_{0.75}Co_{0.05}Mn_{0.2}O₂ was applied as a lithium transition metal oxide particle, and the loading weight (LW) ratio of the first cathode mixture layer (lower layer) and the second cathode mixture layer (upper layer) was adjusted differently. The loading weight ratios of the first cathode mixture layer (lower layer) and the second cathode mixture layer (upper layer) in Example 2 were as shown in Table 1 below.

### (3) Examples 3 to 5

Except that the loading weight (LW) ratio of the first cathode mixture layer (lower layer) and the second cathode mixture layer (upper layer) was adjusted differently, cathodes for a lithium secondary battery of Examples 3 to 5 were manufactured in the same manner as in Example 1, respectively. The loading weight ratios of the first cathode mixture layer (lower layer) and the second cathode mixture layer (upper layer) in Examples 3 to 5 are as shown in Table 1 below.

### (4) Example 6

Except that the content of the binder included in the second cathode mixture layer (upper layer) was adjusted to 1.0 wt% based on the solid content, and the content of the LFP-based active material particles was adjusted to 98.15 wt%, the cathode for a lithium secondary battery of Example 6 was manufactured in the same manner as in Example 1.

### (5) Example 7

Except that the single particle-shaped NCM-based active material particle represented by the chemical formula of LiNi_{0.4}Co_{0.4}Mn_{0.2}O₂ was used as the lithium transition metal oxide particle included in the first cathode mixture layer, a cathode for a lithium secondary battery of Example 7 was manufactured in the same manner as in Example 1.

### (6) Example 8

Except that the single particle-shaped NCM-based active material particle represented by the chemical formula of LiNi_{0.8}Co_{0.1}Mn_{0.1}O₂ was used as the lithium transition metal oxide particle included in the first cathode mixture layer, a cathode for a lithium secondary battery of Example 8 was manufactured in the same manner as in Example 1.

### (7) Comparative Example 1

Except that the structures of the first cathode mixture layer and the second cathode mixture layer were reversed, a cathode for a lithium secondary battery of Comparative Example 1 was manufactured in the same manner as in Example 1. In detail, the cathode for a lithium secondary battery of Comparative Example 1 was manufactured by applying the first cathode slurry and the second cathode slurry in reverse, so that the first cathode mixture layer on the cathode current collector included LFP-based active material particles, and the second cathode mixture layer on the first cathode mixture layer included NCM-based active material particles.

### (8) Comparative Example 2

A cathode for a lithium secondary battery of Comparative Example 2 was manufactured in the same manner as Example 4, except that NCM-based active material particles having a secondary particle structure, not a single particle form, were applied as the lithium transition metal oxide particles included in the first cathode mixture layer, and that the loading weight (LW) ratios of the upper and lower layers were different. In detail, NCM-based active material particles having an average particle diameter (D50) of 12.9 µm and a secondary particle structure represented by a chemical formula of LiNi_{0.6}Co_{0.1}Mn_{0.3}O₂ were applied as the NCM-based active material particles.

### (9) Comparative Example 3

Except that the lithium transition metal oxide particles included in the first cathode mixture layer were NCM-based active material particles having a secondary particle structure rather than a single particle form, a cathode for a lithium secondary battery of Comparative Example 3 was manufactured in the same manner as in Example 1.

### (10) Comparative Examples 4 to 7

Except that both the first cathode mixture layer and the second cathode mixture layer were formed of a first cathode slurry containing NCM-based active material particles, a cathode for a lithium secondary battery of Comparative Examples 4 to 7 was manufactured in the same manner as in Example 1. At this time, the contents of the binder included in the upper and lower layers of the cathodes for a lithium secondary battery of Comparative Examples 4 to 7 are as shown in Table 1 below. In Comparative Examples 4 and 5, the content of the binder included in the first cathode mixture layer was reduced based on the solid content, and the content of the NCM-based active material particles was increased by the amount of the reduced binder content. In Comparative Examples 4 to 6, the content of the binder included in the second cathode mixture layer was reduced based on the solid content, and the content of the NCM-based active material particles was increased by the amount of the reduced binder content.

### 2) Manufacturing of Lithium Secondary Battery

Anode slurry containing anode active material (SiOx, 0<x<2; and graphite) was applied on copper foil (Cu-foil) with a thickness of 8 µm, and then dried to manufacture an anode for a lithium secondary battery. A polyolefin separator was interposed between the cathode and anode manufactured as described above, and the manufactured secondary battery cell was placed in a secondary battery pouch. Then, an electrolyte solution in which 1 M LiPF6 was dissolved in a solvent mixed with ethylene carbonate (EC) and diethyl carbonate (DEC) was injected into the secondary battery pouch, and then sealed to manufacture a pouch-type lithium secondary battery. The manufactured pouch-type lithium secondary battery was applied as a secondary battery sample of Examples and Comparative Examples.

**[Table 1]**

| Classification | Active Material Type of Upper and Lower Layers | | 1st/2nd Cathode Mixture Layer LW ratio (Lower layer: Upper layer) | Binder Contents of Upper and Lower Layers | |
|---|---|---|---|---|---|
| | Lower Layer (1st Cathode Mixture Layer) | Upper Layer (2nd Cathode Mixture Layer) | | Lower Layer (1st Cathode Mixture Layer) | Upper Layer (2nd Cathode Mixture Layer) |
| Example 1 | NCM Single Particle (Ni Content: 60%) | LFP | 80:20 | 1.0 wt% | 1.5 wt% |
| Example 2 | NCM Single Particle (Ni Content: 75%) | LFP | 70:30 | 1.0 wt% | 1.5 wt% |
| Example 3 | NCM Single Particle (Ni Content: 60%) | LFP | 85:15 | 1.0 wt% | 1.5 wt% |
| Example 4 | NCM Single Particle (Ni Content: 60%) | LFP | 70:30 | 1.0 wt% | 1.5 wt% |
| Example 5 | NCM Single Particle (Ni Content: 60%) | LFP | 60:40 | 1.0 wt% | 1.5 wt% |
| Example 6 | NCM Single Particle (Ni Content: 60%) | LFP | 80:20 | 1.0 wt% | 1.0 wt% |
| Example 7 | NCM Single Particle (Ni Content: 40%) | LFP | 80:20 | 1.0 wt% | 1.5 wt% |
| Example 8 | NCM Single Particle (Ni Content: 80%) | LFP | 80:20 | 1.0 wt% | 1.5 wt% |
| Comparative Example 1 | LFP | NCM Single Particle (Ni Content:600) | 80:20 | 1.5 wt% | 1.0 wt% |
| Comparative Example 2 | NCM Secondary Particle (Ni Content: 60%) | LFP | 30:70 | 1.0 wt% | 1.5 wt% |
| Comparative Example 3 | NCM Secondary Particle (Ni Content: 60%) | LFP | 80:20 | 1.0 wt% | 1.5 wt% |
| Comparative Example 4 | NCM Single Particle (Ni Content: 60%) | NCM Single Particle (Ni Content: 60%) | 80:20 | 0.9 wt% | 0.9 wt% |
| Comparative Example 5 | NCM Single Particle (Ni Content: 60%) | NCM Single Particle (Ni Content: 60%) | 80:20 | 0.85 wt% | 0.9 wt% |
| Comparative Example 6 | NCM Single Particle (Ni Content: 60%) | NCM Single Particle (Ni Content: 60%) | 80:20 | 1.0 wt% | 1.0 wt% |
| Comparative Example 7 | NCM Single Particle (Ni Content: 60%) | NCM Single Particle (Ni Content: 60%) | 80:20 | 1.0 wt% | 1.5 wt% |

### 2. Cathode and Secondary Battery Evaluation

### 1) Cell Ignition Test

A cell ignition test was performed on lithium secondary batteries including the cathodes of the examples and comparative examples, and the pressure was measured over time, and the values when the pressure (Bar) was maximum were shown in Table 2 below. At this time, the cell ignition test was performed by attaching a heating pad to the bottom of a fully charged lithium secondary battery cell, placing the same inside a sealed chamber, and increasing the temperature of the heating pad to forcibly ignite the cell.

The pressure at the time of the cell ignition is an indirect indicator of the cell's explosive power and the amount of gas generated, and the flammable gas generated at the time of ignition may promote ignition of adjacent cells in the event of a fire. Accordingly, the greater the amount of gas generated and the higher the pressure, the easier the flame spreads and the higher the cell's explosive power, which may be determined to be insufficient in safety.

### 2) Cell Capacity

The results of measuring the cell discharge capacity for lithium secondary batteries including the cathodes of the examples and comparative examples are shown in Table 2 below. In detail, the lithium secondary battery cell was charged at a constant current of 0.3C rate at 25°C until the voltage reached 4.3 V, and then cut-off at a current of 0.05C rate while maintaining 4.3 V in constant voltage mode to conduct constant voltage charging. Thereafter, the cell discharge capacity (Ah) was measured by discharging at a constant current of 0.3C rate until the voltage reached 2.5 V.

### 3) Electrode Processability

The results of evaluating electrode processability in the process of manufacturing the cathodes of the examples and comparative examples are shown in Table 2 below. In detail, in the process of coating the first cathode slurry and the second cathode slurry, if the amount of the second cathode slurry is insufficient and the surface of the first cathode mixture layer cannot be uniformly coated, a line that may be observed with the naked eye appears on the electrode, and uneven LW may be observed using a laser thickness gauge. In this case, the electrode processability was determined to be insufficient, and if a line was observed with the naked eye, the electrode processability was determined to be 'poor', and if the line was not visible with the naked eye but the LW was uneven with the laser thickness gauge, the electrode processability was determined to be 'normal', and if the line was not visible with the naked eye and the LW was uniform with the laser thickness gauge, the electrode processability was determined to be `excellent'.

### 4) Electrode Adhesion

A 90-degree (°) peel test was performed on the cathodes of the examples and comparative examples using a peel tester, and the results of measuring the adhesion between the cathode current collector and the cathode mixture layer are shown in Table 2 below. In detail, the cathode was cut to a size of 18 mm in width and 150 mm in length, and then a tape with a width of 18 mm was attached to the cathode current collector, and a roller with a load of 2 kg was used to ensure sufficient adhesion. Afterwards, the cathode mixture layer was attached to one side surface of a tensile tester (DS2-50N by IMADA) using double-sided tape, and then the adhesive strength was measured by attaching the tape attached to the cathode current collector to the other side surface of the tensile tester.

### 5) Electrode Resistance

The cathode resistance values were measured by contacting the 4-Point-Probe of the electrode resistance measuring device (by HIOKI) to the cathodes of the examples and comparative examples, and the results are shown in Table 2 below.

**[Table 2]**

| Classification | Maximum pressure at cell ignition (Bar) | Cell Capacity (Ah) | Electrode Processability | Electrode Adhesion (N/18mm) | Electrode Resistance (Ω · cm) |
|---|---|---|---|---|---|
| Example 1 | About 1.8 | 84.9 | Excellent | 0.42 | 4.223 |
| Example 2 | About 2.7 | 85.2 | Excellent | 0.38 | 4.112 |
| Example 3 | About 2.1 | 86.4 | Normal | 0.39 | 4.095 |
| Example 4 | About 1.6 | 81.9 | Excellent | 0.43 | 4.153 |
| Example 5 | About 1.4 | 78.9 | Excellent | 0.42 | 4.242 |
| Example 6 | About 1.8 | 84.7 | Excellent | 0.21 | 4.046 |
| Example 7 | About 1.3 | 79.0 | Excellent | 0.42 | 4.110 |
| Example 8 | About 3.5 | 84.9 | Excellent | 0.41 | 4.321 |
| Comparative Example 1 | About 2.3 | 85.2 | Excellent | 0.28 | 4.431 |
| Comparative Example 2 | About 3.3 | 85.4 | Excellent | 0.37 | 4.078 |
| Comparative Example 3 | About 3.5 | 84.7 | Excellent | 0.36 | 4.055 |
| Comparative Example 4 | About 1.7 | 84.8 | Excellent | 0.33 | 8.342 |
| Comparative Example 5 | About 1.8 | 84.9 | Excellent | 0.30 | 7.239 |
| Comparative Example 6 | About 1.8 | 84.8 | Excellent | 0.42 | 9.513 |
| Comparative Example 7 | About 1.9 | 84.9 | Excellent | 0.43 | 11.268 |

Referring to Tables 1 and 2 above, 1) the cell applying the cathode of Comparative Example 1, in which the lower layer includes lithium metal phosphate particles (LFP) and the upper layer includes lithium transition metal oxide particles (NCM), has a higher maximum pressure at the time of ignition than that of Example 1, thereby insufficient safety, and 2) the cell applying the cathode of Comparative Examples 2 and 3, in which the lower layer includes lithium transition metal oxide particles (NCM) having a secondary particle structure, has a higher maximum pressure at the time of ignition than that of Examples 1 and 2, thereby insufficient safety. In addition, the cathodes of Comparative Examples 4 to 7, in which both the upper and lower layers include lithium transition metal oxide particles (NCM), were found to be unsuitable due to relatively high electrode resistance values.

On the other hand, when the lower layer of the cathode includes lithium transition metal oxide particles (NCM) in the single particle form and the upper layer includes lithium metal phosphate particles (LFP), the cell safety is excellent and the electrode resistance value of the cathode is relatively low (Examples 1 to 8).

On the other hand, referring to Examples 1 and 3 to 5, it can be confirmed that the cell capacity increases as the loading weight (LW) ratio of the second cathode mixture layer to the first cathode mixture layer decreases, but the electrode processability deteriorates when the loading weight (LW) ratio of the second cathode mixture layer is less than 20% (Example 3). Therefore, in Example 1, where the loading weight (LW) ratio of the first cathode mixture layer and the second cathode mixture layer was applied at a level of 8:2, both the cell capacity and the electrode processability were excellent.

In addition, referring to Comparative Examples 4 to 7, in the cathodes including lithium transition metal oxide particles (NCM) in both the upper and lower layers, it can be confirmed that when the binder content in the lower layer is low than in the upper layer, the electrode resistance value and the electrode adhesion decreases (Comparative Examples 4 and 5), and when the binder content in the upper layer is low than in the lower layer, the electrode resistance value decreases but the electrode adhesion is maintained at a similar level (Comparative Examples 6 and 7).

On the other hand, referring to Examples 1 and 6, in the cathodes including lithium metal phosphate particles (LFP) in the upper layer, it can be confirmed that the electrode adhesion is relatively insufficient when the binder content in the upper layer is low (Example 6). This is because lithium metal phosphate particles with relatively small particle sizes have a larger total surface area, so a larger amount of binder is required to secure a similar level of electrode adhesion.

Therefore, it is determined that when the binder content in the upper layer is adjusted to be higher than that in the lower layer as in Example 1, a cathode for a lithium secondary battery having both excellent electrode adhesion and resistance characteristics may be provided.

In addition, referring to Examples 1, 7, and 8, when the nickel (Ni) content is less than 50 mol% based on the entire transition metal oxide excluding lithium (Li) in the lithium transition metal oxide particles included in the lower layer (Example 7), the cell capacity is lower than that in Example 1, and when it exceeds 75 mol% (Example 8), the maximum pressure upon ignition is higher than that in Example 1, resulting in insufficient safety, and the electrode resistance value is higher than that in Example 1.

Therefore, when the content of nickel (Ni) is adjusted to 50 mol% to 75 mol% based on the entire transition metal oxide excluding lithium (Li) in the lithium transition metal oxide particles included in the lower layer as in Example 1, it is determined that a cathode for a lithium secondary battery having a relatively high cell capacity, low electrode resistance value, and improved safety may be provided.

As set forth above, according to an embodiment, the safety of a lithium secondary battery may be improved.

According to an embodiment, a lithium secondary battery having a high energy density may be provided.

According to an embodiment, a lithium secondary battery having excellent lifespan may be provided.

According to an embodiment, a cathode for a lithium secondary battery having improved resistance characteristics may be provided.

Only specific examples of implementations of certain embodiments are described. Variations, improvements and enhancements of the disclosed embodiments and other embodiments may be made based on the disclosure of this patent document.

The present disclosure may also relate to the following aspects.
Aspect 1) A cathode for a lithium secondary battery comprising: a cathode current collector; and a cathode mixture layer on at least one surface of the cathode current collector, wherein the cathode mixture layer includes a first cathode mixture layer on the cathode current collector, and a second cathode mixture layer on the first cathode mixture layer, the first cathode mixture layer includes a lithium transition metal oxide particle in a form of a single particle containing nickel (Ni), and the second cathode mixture layer includes lithium metal phosphate particles.
Aspect 2) The cathode for a lithium secondary battery of aspect 1, wherein the lithium transition metal oxide particle is represented by Chemical Formula 1,

   [Chemical Formula 1] LiₓNiₐCo_{b}Mn_{c}Mn_{d}O_{2+y},

   where M is at least one element selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, and Zr, and 0.8≤x≤1.5, -0.1≤y≤0.1, 0.33≤a≤1, 0≤b≤0.33, 0≤c≤0.33, 0≤d≤0.33, and a+b+c+d=1.
Aspect 3) The cathode for a lithium secondary battery of aspect 1 or 2, wherein in the lithium transition metal oxide particle, a content of nickel (Ni) is 50 mol% to 75 mol% based on an entire transition metal oxide excluding lithium (Li).
Aspect 4) The cathode for a lithium secondary battery of any one of aspects 1 to 3, wherein the lithium transition metal oxide particle is coated or doped with at least one selected from the group consisting of Al, Ti, Ba, Zr, Si, B, Mg, P, V, W, alloys thereof, and oxides thereof.
Aspect 5) The cathode for a lithium secondary battery of any one of aspects 1 to 4, wherein the lithium metal phosphate particles are represented by Chemical Formula 2,

   [Chemical Formula 2] LiMePO₄,

   where Me is at least one element selected from Co, Ni, Fe, and Mn.
Aspect 6) The cathode for a lithium secondary battery of any one of aspects 1 to 5, wherein an average particle diameter (D50) of the lithium metal phosphate particles is equal to or less than an average particle diameter (D50) of the lithium transition metal oxide particle.
Aspect 7) The cathode for a lithium secondary battery of any one of aspects 1 to 6, wherein an average particle diameter (D50) of the lithium metal phosphate particle is 0.5 µm to 3 µm.
Aspect 8) The cathode for a lithium secondary battery of any one of aspects 1 to 7, wherein an average particle diameter (D50) of the lithium transition metal oxide particle is 3 µm to 7 µm.
Aspect 9) The cathode for a lithium secondary battery of any one of aspects 1 to 8, wherein a loading weight ratio of the first cathode mixture layer and the second cathode mixture layer is 70:30 to 85:15.
Aspect 10) The cathode for a lithium secondary battery of any one of aspects 1 to 9, wherein a loading weight of the first cathode mixture layer is 11.2 mg/cm² to 27 mg/cm².
Aspect 11) The cathode for a lithium secondary battery of any one of aspects 1 to 10, wherein a loading weight of the second cathode mixture layer is 1.6 mg/cm² to 9 mg/cm².
Aspect 12) The cathode for a lithium secondary battery of any one of aspects 1 to 11, wherein the first cathode mixture layer and the second cathode mixture layer each further include a binder, wherein a content of the binder included in the first cathode mixture layer is different from a content of the binder included in the second cathode mixture layer.
Aspect 13) The cathode for a lithium secondary battery of aspect 12, wherein a weight % of the binder included in the second cathode mixture layer is greater than or equal to a weight % of the binder included in the first cathode mixture layer.
Aspect 14) A lithium secondary battery comprising the cathode for a lithium secondary battery according to any one of aspects 1 to 13.

### DESCRIPTION OF REFERENCE NUMERALS

100: Cathode for a lithium secondary battery
10: Cathode current collector
20: Cathode mixture layer
21: First cathode mixture layer
22: Second cathode mixture layer

## Claims

1. A cathode for a lithium secondary battery comprising:
a cathode current collector; and
a cathode mixture layer on at least one surface of the cathode current collector,
wherein the cathode mixture layer includes a first cathode mixture layer on the cathode current collector, and a second cathode mixture layer on the first cathode mixture layer,
the first cathode mixture layer includes a lithium transition metal oxide particle in a form of a single particle containing nickel (Ni), and
the second cathode mixture layer includes lithium metal phosphate particles.

2. The cathode for a lithium secondary battery of claim 1, wherein the lithium transition metal oxide particle is represented by Chemical Formula 1,
[Chemical Formula 1] LiₓNiₐCo_{b}Mn_{c}Mn_{d}O_{2+y},
where M is at least one element selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P, and Zr, and 0.8≤x≤1.5, -0.1≤y≤0.1, 0.33≤a≤1, 0≤b≤0.33, 0≤c≤0.33, 0≤d≤0.33, and a+b+c+d=1.

3. The cathode for a lithium secondary battery of claim 1 or 2, wherein in the lithium transition metal oxide particle, a content of nickel (Ni) is 50 mol% to 75 mol% based on an entire transition metal oxide excluding lithium (Li).

4. The cathode for a lithium secondary battery of any one of claims 1 to 3, wherein the lithium transition metal oxide particle is coated or doped with at least one selected from the group consisting of Al, Ti, Ba, Zr, Si, B, Mg, P, V, W, alloys thereof, and oxides thereof.

5. The cathode for a lithium secondary battery of any one of claims 1 to 4, wherein the lithium metal phosphate particles are represented by Chemical Formula 2,
[Chemical Formula 2] LiMePO₄,
where Me is at least one element selected from Co, Ni, Fe, and Mn.

6. The cathode for a lithium secondary battery of any one of claims 1 to 5, wherein an average particle diameter (D50) of the lithium metal phosphate particles is equal to or less than an average particle diameter (D50) of the lithium transition metal oxide particle.

7. The cathode for a lithium secondary battery of any one of claims 1 to 6, wherein an average particle diameter (D50) of the lithium metal phosphate particle is 0.5 µm to 3 µm.

8. The cathode for a lithium secondary battery of any one of claims 1 to 7, wherein an average particle diameter (D50) of the lithium transition metal oxide particle is 3 µm to 7 µm.

9. The cathode for a lithium secondary battery of any one of claims 1 to 8, wherein a loading weight ratio of the first cathode mixture layer and the second cathode mixture layer is 70:30 to 85:15.

10. The cathode for a lithium secondary battery of any one of claims 1 to 9, wherein a loading weight of the first cathode mixture layer is 11.2 mg/cm² to 27 mg/cm².

11. The cathode for a lithium secondary battery of any one of claims 1 to 10, wherein a loading weight of the second cathode mixture layer is 1.6 mg/cm² to 9 mg/cm².

12. The cathode for a lithium secondary battery of any one of claims 1 to 11, wherein the first cathode mixture layer and the second cathode mixture layer each further include a binder,
wherein a content of the binder included in the first cathode mixture layer is different from a content of the binder included in the second cathode mixture layer.

13. The cathode for a lithium secondary battery of claim 12, wherein a weight % of the binder included in the second cathode mixture layer is greater than or equal to a weight % of the binder included in the first cathode mixture layer.

14. A lithium secondary battery comprising the cathode for a lithium secondary battery according to any one of claims 1 to 13.
